# EUROPEAN PATENT APPLICATION

(11) **EP 1 770 616 A1**
(43) Date of publication of application: **04.04.2007**
(21) Application number: 05755887.6
(22) Date of filing: 30.06.2005
(51) Int. Cl.: G06Q 10/00

(54) **CONTENT PROVIDING DEVICE AND METHOD AND CONTENT PROVIDING SYSTEM**

(30) Priority: 14.07.2004 JP 2004207024
(71) Applicant: SONY CORPORATION, Tokyo 141-0001 (JP)
(72) Inventor: Sako, Yoichiro, Sony Corporation, Shinagawa-ku, Tokyo 1410001 (JP)
(74) Representative: Nicholls, Michael John
(86) International application number: PCT/JP2005/012073
(87) International publication number: WO 2006/006417

(57) **Abstract**

Disclosed is a contents providing apparatus which is responsive to a request from an authentic purchaser of contents to provide contents the format of which has been converted into a format different from the format with which the contents were provided to the authentic purchaser. The user registration is made as the user information is correlated with the contents information, and the user registration is authenticated responsive to an access from the user. Depending on the results of authentication, a module for converting the contents is provided, or the contents are converted in accordance with the format as requested by the user, and the so converted contents are provided.

## Description

### Technical Field

This invention relates to an apparatus, a method and a system for providing contents of a format different from one used when the contents were first provided to an authentic purchaser of the contents, in response to a request by the authentic purchaser.
The present invention contains subject matter related to Japanese Patent Application JP 2004-207024 filed in the Japanese Patent Office on July 14, 2004, the entire contents of which being incorporated herein by reference.

### Background Art

Nowadays, it is customary that contents data, such as music, images or motion pictures are distributed over a network, or sold as package mediums. The contents data and the package mediums, on which the contents data are recorded, are prescribed by a preset format.
Hence, a user has to verify whether or not the format of contents he/she is desirous to purchase may be coped with in an apparatus he/she owns. In case the apparatus the user owns is not in compliance with the format of the contents in question, he/she would have to purchase an apparatus which is in compliance with the format of the contents. Moreover, in case the format of the contents has become out of date, there may arise an inconvenience that the apparatus which is in keeping with the contents format is not available on the marketplace.
In the Japanese Laid-Open Patent Publications 2003-143125 and 2003-150178, there is disclosed a method according to which it is unnecessary to re-purchase an apparatus even in case the contents format has been changed.
The methods disclosed in these Publications are limited to cases where changes in the contents format can be coped with in terms of the application, that is, by upgrading e.g. a module. However, the method cannot cope with in such a case where the format relating to the outer shape or appearance, such as package shape or size, has been changed. In such case, the user is obliged to purchase the apparatus suited to the so changed contents format. Moreover, it may come to pass that the apparatus suited to the changed content format ceases to be offered to the market.

### Disclosure of the Invention

### Problems to be solved by he Invention

To solve the above problem, the present invention provides an apparatus, a method and a system for providing contents according to which the contents already purchased by a user may be reproduced or read out even in cases where the contents format is changed as regards the outer shape or appearance, without the user having to re-purchase the apparatus.
The present invention provides an apparatus for providing contents including registration means, authentication means, confirmation means and providing means. The registration means registers the purchaser information of a purchaser who purchased preset contents and the contents information of the contents in a correlated fashion. The authentication means collates the authentication of the purchaser based on the purchaser information registered by the registration means. The confirmation means confirms a format form of the contents requested by the purchaser who has his/her authentication collated by the authentication means, in case the authentication has been collated by said authentication means. The providing means provides a module usable for converting, in accordance with the format form of contents confirmed by the confirmation means, the contents corresponding to the contents information, registered in the registration means, in relation to the purchaser information, or provides contents converted in accordance with the format form of contents confirmed by the confirmation means, to the purchaser who has his/her authentication collated by the authentication means.
According to the present invention, the registration means registers the purchaser information of the purchaser of the contents composed of audio data, moving picture data, still image data or preset programs, prescribed by a preset format, in relation to the information of the contents.
The registration means registers the purchaser information of the purchaser who has purchased a recording medium or a communication medium, having recorded thereon contents prescribed by a preset format, in relation to the contents information.
The confirmation means confirms a format form different in the sound quality, image quality, recording system, transmission system or the attribute information from the format of the contents prescribed at the time the contents were purchased.
The present invention also provides a method for providing contents including a registration step of registering the purchaser information of a purchaser who purchased preset contents and the contents information of the contents in a correlated fashion, an authentication step of collating the authentication of the purchaser based on the purchaser information registered by the registration step, a confirmation step of confirming the format form of contents requested by a purchaser who has his/her authentication collated by the authentication step, and a providing step of providing a module for converting, in accordance with the format form of contents confirmed by the authentication step, the contents corresponding to the contents information registered in relation to the purchaser information in the registration step, or providing contents converted in accordance with the format form of contents confirmed by the authentication step, to the purchaser whose authentication has been collated by the authentication step.
In this method for providing contents, the registration step registers the purchaser information of the purchaser of the contents composed of audio data, moving picture data, still image data or preset programs, prescribed by a preset format, in relation to the information of the contents.
The registration step registers the purchaser information of the purchaser who has purchased a recording medium or a communication medium, having recorded thereon contents prescribed by a preset format, in relation to the contents information.
The confirmation step confirms a format form different in the sound quality, image quality, recording system, transmission system or the attribute information from the format of the contents prescribed at the time the contents were purchased.
The present invention also provides a system for providing contents, made up of a first information processing apparatus and a second information processing apparatus, with the first and second apparatus transmitting contents to/ receiving contents from each other over a network. The first information processing apparatus includes registration means, authentication means, confirmation means and providing means. The registration means registers the purchaser information of a purchaser who purchased preset contents and the contents information of the contents in a correlated fashion. The authentication means collates the authentication of the purchaser based on the purchaser information registered by the registration means. The confirmation means confirms the format form of contents requested by a purchaser whose authentication has been collated by the authentication means. The providing means provides a module usable for converting, in accordance with the format form of contents confirmed by the authentication means, the contents corresponding to the contents information registered in the registration means in relation to the purchaser information, or provides contents converted in accordance with the format form of contents confirmed by the authentication means, to the purchaser who has his/her authentication collated by the authentication means. The second information processing apparatus includes accessing means and specifying means. The accessing means accesses the first information processing apparatus over a network, and the specifying means specifies the format form of contents already purchased over the network.
According to the present invention, user registration is made, responsive to a request from a user who has purchased the contents, as the user information is correlated with the contents information. The user registration is authenticated responsive to an access from a user. Depending on the results of authentication, a module usable for converting the contents in accordance with a format as requested by the user is provided, or the contents are converted in accordance with the format requested by the user, and the contents so converted are provided. Thus, even in such a case where the reproduction or readout of the contents, owned by the user, has become difficult on the part of the user by reason of the change in the format of the contents, he/she may not be compelled to bear the expenses in connection with re-purchasing the apparatus.
Hence, when the format has been evolved with changes of the times, a new format may be made available without incurring the burden of re-purchasing the hardware or the software on the part of the user.
Other objects and specified advantages of the present invention will become more apparent from the following explanation of preferred embodiments thereof which will now be made in conjunction with the drawings.

### Brief Description of the Drawings

Fig.1 shows the constitution of a contents providing system according to the present invention.
Fig.2 is a block diagram showing the constitution of an electronic apparatus of the contents providing system shown in Fig. 1.
Fig.3 is a block diagram showing the constitution of a server of the contents providing system shown in Fig. 1.
Fig.4 shows a registration list generated by a registration program.
Fig.5 is a flowchart for illustrating the sequence of operations for user registration.
Fig.6 is a flowchart for illustrating the sequence of operations for providing the contents.

### Best Mode for Carrying out the Invention

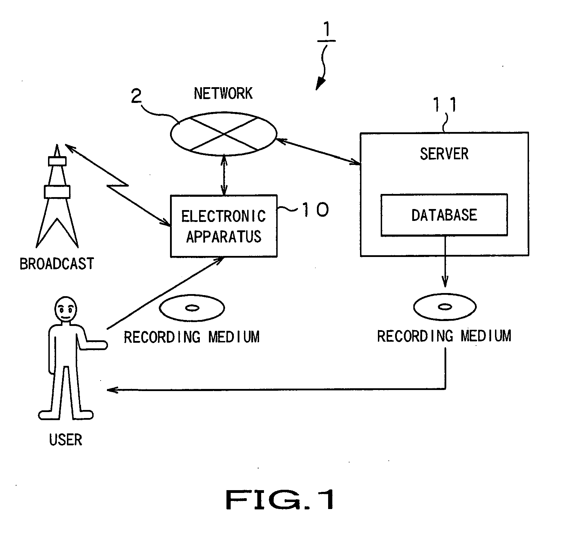

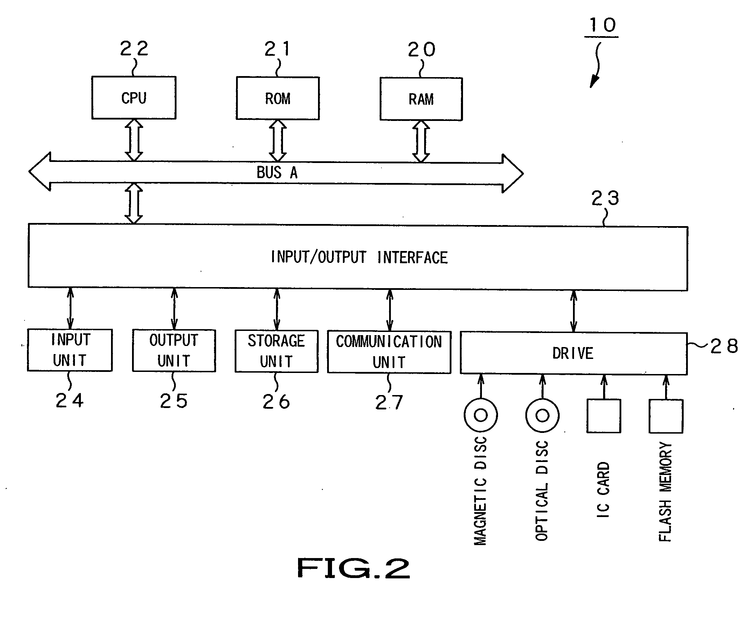

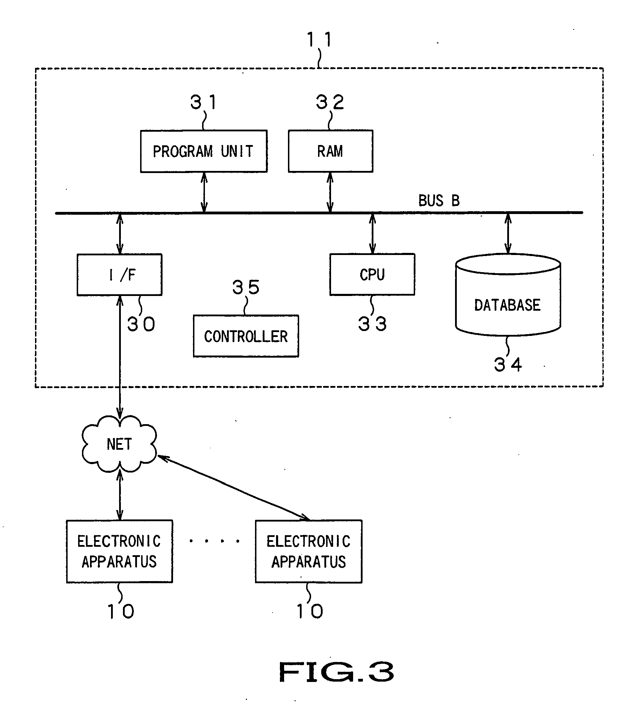

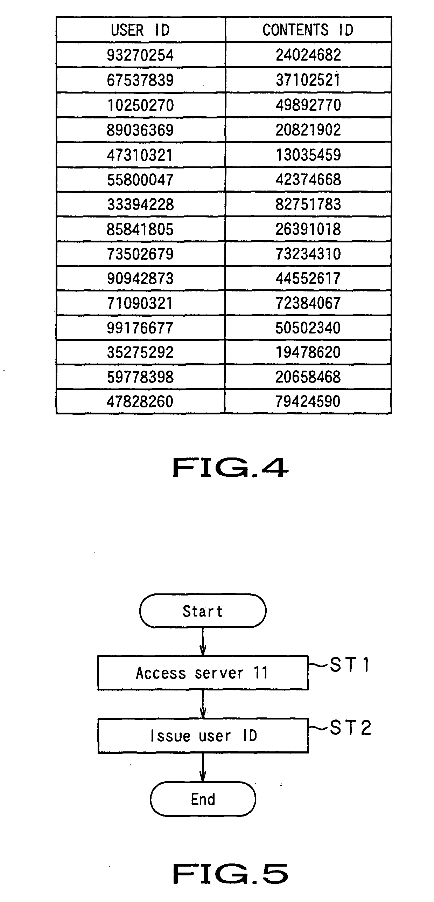

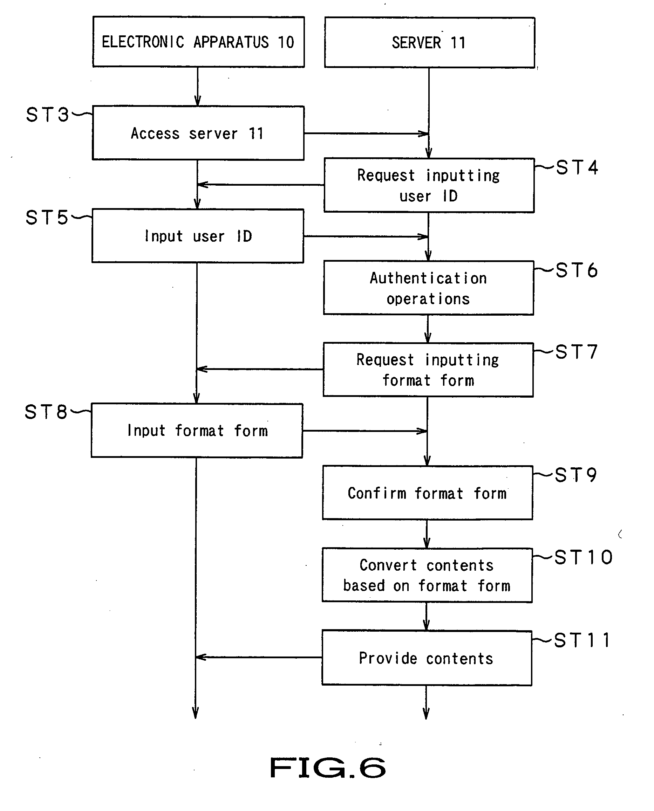

An embodiment of the present invention, in which the invention is applied to a system for providing contents to a user, will now be described in detail.
A contents providing system 1 according to the present invention includes a client side electronic apparatus 10, and a contents server 11, referred to below as a server 11, for providing contents to the electronic apparatus 10 over a network 2, as shown in Fig.1. It is assumed that a plural number of electronic apparatus 10 are connected to the server 11 over the network. The electronic apparatus 10 is a PC (Personal Computer) or an audio-visual apparatus, for example.
The electronic apparatus 10 is supplied with contents from the server 11 over the network, and performs preset information processing on the so provided contents. Referring to Fig.2, the electronic apparatus includes a RAM 20 for transient storage of data, a ROM 21 having preset data stored therein, a CPU 22 for executing preset processing operations, and an input/output interface 23. These components are interconnected on the bus A.
To the input/output interface 23 is connected an input unit 24 constituted by a keyboard, a mouse and so forth. The signals transmitted to the input unit 24 are output to the CPU 22. To the input/output interface 23 is also connected an output unit 25 constituted by a display, a loudspeaker and so forth.
To the input/output interface 23, there are also connected a storage unit 26, formed by, for example, a hard disc, a communication unit 27, adapted for exchanging data with another apparatus, such as server 11, over the network 2, such as the Internet, and a drive 28, adapted for mounting and dismounting various mediums. The drive 28 is used to read data from/ write data to a magnetic disc, an optical disc, an IC card, or a semiconductor memory (flash memory) as a recording medium.
Referring to Fig.3, the server 11 includes an interface (I/F) 30 for transmitting data to/ receiving data from the electronic apparatus 10, over the network, and a program unit 31, where various programs are stored. The server also includes a RAM 32 for transient data storage, and a CPU 33 for executing preset processing operations. The server further includes a database 34 for storing and holding various data, and a controller 35 for controlling various parts making up the server 11. These components are arranged interconnected on a bus B.
The program unit 31 includes a registration program for carrying out preset registration operations, and an authentication program for authenticating and collating a user ID. The program unit also includes a confirmation program for confirming the format form of the contents, as requested by the user, and a providing program. The providing program provides a module, such as a decoder, for converting contents in accordance with the format form as requested by the user, or provides the converted contents to the user.
When the user has purchased the contents, the registration program executes the operations of accepting the user registration, issuing the preset user information, referred to below as user ID, and correlating the user ID and the contents information, referred to below as contents ID, to each other. The registration program generates a list for the user ID and the contents ID, shown for example in Fig.4. The list generated by the registration program is stored in the database 34. If accessed by the user, the authentication program requests the user to input his/her user ID. The registration program refers to a list stored in the database 34 to perform an operation of authentication and collation to check whether or not there has been registered a user ID corresponding to the so input user ID.
In case the user authentication has been collated by the authentication program, the confirmation program requests the user to input the format form for the contents, as desired by the user, and confirms the format form input responsive to the request.
Depending on the format form, as confirmed by the confirmation program, the providing program carries out the operation of providing a module, such as a decoder, usable for converting the contents corresponding to the contents information correlated with the user information, entered in the list generated by the registration program, or of converting the contents and providing the so converted contents to the user.
In the database 34, there is stored a list of the user ID and the contents ID, as generated by the registration program. In the database 34 are further stored the contents and modules, such as decoders, for converting the contents into contents of preset formats.
The sequence of operations for user registration, carried out in the contents providing system 1, will now be described in accordance with a flowchart shown in Fig.5.
In a step ST1, the electronic apparatus 10 accesses the server 11. In accessing the server 11, the electronic apparatus 10 makes a request for user registration. The server 11 is responsive to the access by the electronic apparatus 10 to read out the registration program stored in the program unit 31 and boots the so read out registration program.
In a step ST2, the server 11 issues a user ID. That is, the electronic apparatus 10 receives the user ID issued by the server 11. The server 11 also issues an intrinsic user ID by the booted registration program.
If the user has purchased a package medium, having contents recorded therein, the user acquires an ID intrinsic to the package medium (contents ID). The contents ID is imprinted in a location that cannot be seen from outside. The server 11 requests the user to enter the contents ID, in accordance with the registration program, booted by the step ST1, responsive to the access from the user. In case the entry of the contents ID has been made from the user, the server 11 confirms whether or not the contents ID has been issued legally, and accordingly issues the user ID.
The sequence of operations of the contents providing system 1 providing the contents when the user registration has been completed as described above will now be described in accordance with the flowchart shown in Fig.6.
In a step S3, the electronic apparatus 10 accesses the server 11. When accessing the server 11, the electronic apparatus 10 requests the server 11 to provide him/her with the contents converted in accordance with a preset format. Responsive to the access from the electronic apparatus 10, the server 11 reads out the authentication program stored in the program unit 31 to boot the so read out authentication program.
In a step ST4, the server 11 requests the electronic apparatus 10 to enter a user ID.
In a step ST5, the electronic apparatus 10 is responsive to the request from the server 11 to enter the user ID issued in the step ST2.
In a step ST6, the server 11 carries out the authentication operation based on the user ID as entered from the electronic apparatus 10. The server 11 refers to the list stored in the database 34 to verify whether or not the user ID supplied from the electronic apparatus 10 has been registered. If the user ID has not been registered, the server 11 may again prompt the electronic apparatus 10 to input the user ID, or may transmit a message to the effect that it is not possible to authenticate the user ID.
In case the server 11 has confirmed the registration of the user ID, the server 11 reads out the confirmation program stored in the program unit 31 to boot the so read out confirmation program. The server then transfers to a step ST7.
In the step ST7, the server 11 requests the electronic apparatus 10 to enter the format form.
In a step ST8, the electronic apparatus 10 enters the format form in accordance with the request from the server 11.
In a step ST9, the server 11 verifies the format form transmitted from the electronic apparatus 10. In case the format form as verified is such a one that cannot be coped with, the server 11 transmits a message of that tenor to the electronic apparatus 10. In case the format form as verified is such a one that can be coped with, the server 11 reads out the providing program from the program unit 31 and boots the providing program as read out. The server then transfers to a step ST10.
In the step ST10, the server 11 converts the contents, based on the format form as requested from the electronic apparatus 10.
In a step ST11, the server 11 transmits the contents, as converted in accordance with the step ST10, to the electronic apparatus 10.
Instead of providing the contents converted in accordance with the requested format form, the contents providing system 1 may supply a module, such as a decoder, in order for the user to convert the contents in accordance with the requested format form.
Meanwhile, the contents providing system 1 may transmit the contents, converted in accordance with the requested format form, or the module for the user to convert the contents in accordance with the requested format form, to the electronic apparatus 10 over a wired network or a wireless network. Or, the contents providing system may record the contents converted or the module on a preset package medium and deliver the package medium to the user. In such case, the contents providing system requests the electronic apparatus 10 to enter the information as to in which fashion the user is desirous to have the contents delivered to him/her, such as in the step ST7 when the contents providing system requests the electronic apparatus 10 to enter the format form. The contents providing system 1 then provides the contents to the electronic apparatus 10 in the desired fashion.
The contents providing system 1 may be configured so that, when an access is made from the electronic apparatus 10, the fact that a new format has been introduced is notified to the electronic apparatus 10. In this case, when an access has been made from the electronic apparatus 10, the contents providing system 1 notifies the electronic apparatus of the fact that the new format has been introduced, and verifies whether or not the electronic apparatus 10 is desirous to convert the format to the new format. If desirous to convert the format to the new format, the electronic apparatus 10 sends the message to that tenor to the server 11. The server 11 then provides, in the steps ST9 to ST11, the contents converted in accordance with the new format, or a module for converting the contents to the contents of the new format, to the electronic apparatus 10.
With the contents providing system 1, configured as described above, the user registration is made, responsive to the request of the user who purchased the contents, as the user information is correlated with the contents information. In addition, the user registration is authenticated responsive to the accessing from the user and, depending on the results of authentication, either the module for converting the contents in accordance with the format requested by the user is provided, or the contents are converted in accordance with the format as requested by the user and the so converted contents are provided. Thus, even in such a case where the reproduction or readout of the contents as owned by the user has become difficult on the part of the user by reason of the change in the format of the contents, he/she may not be compelled to bear the expenses in connection with purchasing an apparatus.
Moreover, with the contents providing system 1, in case the format has been modified, with the changes of the times, such as by improved sound or image quality of the contents or by addition of the attribute information, the user owning the contents is not compelled to bear the expenses in connection with purchasing the apparatus.
Hence, the user is in a position to enjoy high-quality contents of the new format without incurring disadvantages in the event of introduction of new formats which may be made with an ever increasing frequency in this age of digitization.
A toll system may be introduced into the contents providing system 1. For example, contents may be provided free of charge and billing may be made according as the contents are used, or enterprises may be conducted continually on annual service membership dues and billing may be made at the time of providing modules, such as new decoders.
The present invention is not limited to the particular configurations of the embodiments described above with reference to the drawings.. It will be appreciated that the present invention may encompass various changes or corrections such as may readily be arrived at by those skilled in the art within the scope and the principle of the invention:

## Claims

1. An apparatus for providing contents comprising:
registration means for registering the purchaser information of a purchaser who purchased preset contents and the contents information of said contents in a correlated fashion;
authentication means for collating the authentication of the purchaser based on the purchaser information registered by said registration means;
confirmation means for confirming a format form of said contents requested by the purchaser who has his/her authentication collated by said authentication means, in case the authentication has been collated by said authentication means; and
providing means for providing a module usable for converting, in accordance with the format form of contents confirmed by said confirmation means, the contents corresponding to the contents information registered in said registration means in relation to the purchaser information, or contents converted in accordance with the format form of contents confirmed by said confirmation means, to the purchaser who has his/her authentication collated by said authentication means.

2. The apparatus for providing contents according to claim 1 wherein said registration means registers the purchaser information of the purchaser of said contents composed of audio data, moving picture data, still image data or preset programs, prescribed by a preset format, in relation to said contents information.

3. The apparatus for providing contents according to claim 1 wherein said registration means registers the purchaser information of the purchaser who has purchased a recording medium or a communication medium, having recorded thereon contents prescribed by a preset format, in relation to the information of said contents.

4. The apparatus for providing contents according to claim 1 wherein said confirmation means confirms a format form different in the sound quality, image quality, recording system, transmission system or the attribute information from the format of said contents prescribed at the time the contents were purchased.

5. A method for providing contents comprising:
a registration step of registering the purchaser information of a purchaser who purchased preset contents and the contents information of said contents in a correlated fashion;
an authentication step of collating the authentication of the purchaser based on the purchaser information registered by said registration step;
a confirmation step of confirming the format form of contents requested by a purchaser who has his/her authentication collated by said authentication step, in case the authentication has been collated by said authentication step; and
a providing step of providing a module for converting, in accordance with the format form of contents confirmed by said authentication step, the contents corresponding to the contents information registered in relation to the purchaser information in said registration step, or contents converted in accordance with the format form of contents confirmed by said authentication step, to the purchaser who has his/her authentication collated by said authentication step.

6. The method for providing contents according to claim 5 wherein said registration step registers the purchaser information of the purchaser of said contents composed of audio data, moving picture data, still image data or preset programs, prescribed by a preset format, in relation to the information of said contents.

7. The method for providing contents according to claim 5 wherein said registration step registers the purchaser information of the purchaser who has purchased a recording medium or a communication medium, having recorded thereon contents prescribed by a preset format, in relation to the information of said contents.

8. The method for providing contents according to claim 5 wherein said confirmation step confirms a format form different in the sound quality, image quality, recording system, transmission system or the attribute information from the format of said contents prescribed at the time said contents are purchased.

9. A system for providing contents, made up of a first information processing apparatus and a second information processing apparatus, said first and second information processing apparatus transmitting contents to/ receiving contents from each other over a network,
said first information processing apparatus including:
registration means for registering the purchaser information of a purchaser who purchased preset contents and the contents information of said contents in a correlated fashion;
authentication means for collating the authentication of the purchaser based on the purchaser information registered by said registration means;
confirmation means for confirming the format form of contents requested by a purchaser who has his/her authentication collated by said authentication means, in case the authentication has been collated by said authentication means; and
providing means for providing a module usable for converting, in accordance with the format form of contents confirmed by said confirmation means, the contents corresponding to the contents information registered in said registration means in relation to the purchaser information, or providing contents converted in accordance with the format form of contents confirmed by said confirmation means, to the purchaser who has his/her authentication collated by said authentication means;
said second information processing apparatus including:
accessing means for accessing said first information processing apparatus over a network; and
specifying means for specifying the format form of contents already purchased over said network.
